# EUROPÄISCHE PATENTANMELDUNG

(11) **EP 1 174 968 A1**
(43) Veröffentlichungstag der Anmeldung: **23.01.2002**
(21) Anmeldenummer: 00810644.5
(22) Anmeldetag: 19.07.2000
(51) Int. Cl.: H02B 13/035

(54) **Hochspannungsschaltanlage**

(71) Anmelder: ABB T&D Technology AG, 8050 Zürich (CH)
(72) Erfinder: Müller, Lorenz, Dr., 5412 Gebenstorf (CH); Nohl, Andreas, 8006 Zürich (CH); Pohle, Michael, 8049 Zürich (CH); Grob, Stephan, 5400 Baden (CH); Kaltenegger, Kurt, Dr., 5426 Lengnau (CH)
(74) Vertreter: ABB Patent Attorneys

(57) **Zusammenfassung**

Diese Hochspannungsschaltanlage weist pro Phase mindestens eine Freileitung (7), mindestens ein Übergangselement für das Einleiten der mindestens einen Freileitung (7,39) in einen metallgekapselten Teil der Schaltanlage und mindestens ein Schaltgerät (1) für das Schalten von Betriebs- und/oder Fehlerströmen auf. Diese Hochspannungsschaltanlage ist besonders günstig zu erstellen, da das Schaltgerät (1) in das Innere des Übergangselements integriert ist, d.h. die Funktion der Hochspannungsdurchführung wird durch das Schaltgerät (1) mit übernommen.

## Beschreibung

### TECHNISCHES GEBIET

Die Erfindung geht aus von einer Hochspannungsschaltanlage mit einem Schaltgerät gemäss dem Oberbegriff des Anspruchs 1.

### STAND DER TECHNIK

Hochspannungsschaltanlagen werden üblicherweise als metallgekapselte gasisolierte Schaltanlagen oder als Freiluftschaltanlagen oder als mit Dead-Tank-Schaltern ausgerüstete Anlagen ausgeführt, wobei die Anlagen mit Dead-Tank-Schaltern als eine Mischform aus den beiden erstgenannten Anlagenformen angesehen werden können. Wegen des vom Anlagentyp abhängigen unterschiedlichen Volumens, welches für die Schaltkammern der jeweiligen Schaltgeräte und für deren Auspuffgase zur Verfügung steht, sind bisher für jeden Anlagentyp unterschiedlich ausgebildete Schaltkammern eingesetzt worden, obwohl seitens der Hersteller versucht wurde, eine möglichst grosse Anzahl von Gleichteilen bei den unterschiedlichen Schaltkammern einzusetzen. Diese unterschiedlichen Schaltkammern müssen jeweils separat entwickelt werden, wodurch diese Schaltkammern verteuert werden. Zusätzlich verteuert die Lagerhaltung einer Vielzahl von unterschiedlichen Bestandteilen diese Schaltkammern erheblich, so sind hier beispielsweise unterschiedliche Isoliergehäuse für die Schaltkammern nötig.

Aus der Schrift EP 0 989 650 A1, insbesondere deren Figur 3, ist eine Hochspannungsschaltanlage bekannt, bei der jede Phase der auf Hochspannungspotential liegenden Freileitung mittels einer Durchführung in die entsprechende Phase einer einphasig metallgekapselten gasisolierten Schaltanlage eingeführt wird. Sämtliche Schaltgeräte für das Schalten von Betriebs- und Fehlerströmen sind hier im Bereich innerhalb der metallgekapselten gasisolierten Schaltanlage vorgesehen. Die Schaltkammern dieser metallgekapselten gasisolierten Schaltanlage sind für Revisionen vergleichsweise schlecht zugänglich und sie lassen sich nicht ohne weiteres in einer Freiluftschaltanlage einsetzen.

### DARSTELLUNG DER ERFINDUNG

Die Erfindung, wie sie in den unabhängigen Ansprüchen gekennzeichnet ist, löst die Aufgabe, eine Hochspannungsschaltanlage zu schaffen, die besonders preisgünstig zu erstellen ist und die eine verbesserte Verfügbarkeit aufweist.

Dies wird dadurch erreicht, dass für alle Anlagentypen das gleiche Schaltgerät und nur ein und der selbe Schaltkammertyp verwendet wird, wobei jedoch das Schaltgerät neu an einer bisher nicht üblichen Stelle der Hochspannungsschaltanlage angeordnet wird. Die Hochspannungsdurchführung wird ersetzt durch dieses Schaltgerät in Verbindung mit eventuell für die Erreichung der vorgeschriebenen Spannungsabstände nötigen Distanzstücken.

Die durch die Erfindung erreichten Vorteile sind darin zu sehen, dass die ursprünglich nur für den Einsatz in Freiluftschaltanlagen entwickelten Schaltkammern mit dem für diesen Einsatz vorgesehenen Isolierrohr nun sowohl für Dead-Tank-Schalter als auch zusammen mit metallgekapselten gasisolierten Schaltanlagen eingesetzt werden können. Im Hinblick auf die Verfügbarkeit der Hochspannungsschaltanlagen ergeben sich wegen der besseren Zugänglichkeit der Schaltgeräte, wodurch wesentlich schnellere Revisionsarbeiten ermöglicht werden, weitere Vorteile. Zudem wird die Lagerhaltung von Ersatzteilen wesentlich erleichtert. Als besonders vorteilhaft wirkt es sich aus, dass der für Hochspannungsdurchführungen nötige Raum zugleich für die Schaltgeräte genutzt werden kann, sodass der Platz für die Schaltgeräte in der übrigen Hochspannungsschaltanlage eingespart werden kann, was eine Verringerung des das Bauvolumens der Hochspannungsschaltanlage mit sich bringt, was zugleich eine Reduzierung der Erstellungskosten bedeutet.

Jedes Schaltgerät kann für sich allein für Revisionen und Kontrollen sehr einfach, d.h. ohne aufwendige Montagearbeiten aus der Hochspannungsschaltanlage entfernt werden. Es ist demnach möglich, den jeweiligen Pol des Schaltgeräts ähnlich einfach wie eine Hochspannungssicherung auszuwechseln und einen gleichartigen Ersatzpol einzubauen, während der ersetzte Pol revidiert wird. Bei diesem Auswechselvorgang kann die metallgekapselte Sammelschiene weiter Spannung führen, sodass die übrigen Abgänge der Hochspannungsschaltanlage weiter mit Energie versorgt werden. Die Verfügbarkeit der Hochspannungsschaltanlage wird durch diese einfache Montage sehr vorteilhaft erhöht.

Die weiteren Ausgestaltungen der Erfindung sind Gegenstand der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Figur 1 einen Schnitt durch eine erste Ausführungsform einer stark vereinfacht dargestellten erfindungsgemässen Hochspannungsschaltanlage,
Figur 2 einen Schnitt durch eine zweite Ausführungsform einer stark vereinfacht dargestellten erfindungsgemässen Hochspannungsschaltanlage,
Figur 3 einen Schnitt durch eine dritte Ausführungsform einer stark vereinfacht dargestellten erfindungsgemässen Hochspannungsschaltanlage,
Figur 4 einen Schnitt durch eine vierte Ausführungsform einer stark vereinfacht dargestellten erfindungsgemässen Hochspannungsschaltanlage, und
Figur 5 eine Ansicht einer besonders günstig gestalteten Hochspannungsschaltanlage.

Bei allen Figuren sind gleich wirkende Elemente mit gleichen Bezugszeichen versehen. Alle für das unmittelbare Verständnis der Erfindung nicht erforderlichen Elemente sind nicht dargestellt bzw. nicht beschrieben.

### WEGE ZUR AUSFÜHRUNG DER ERFINDUNG

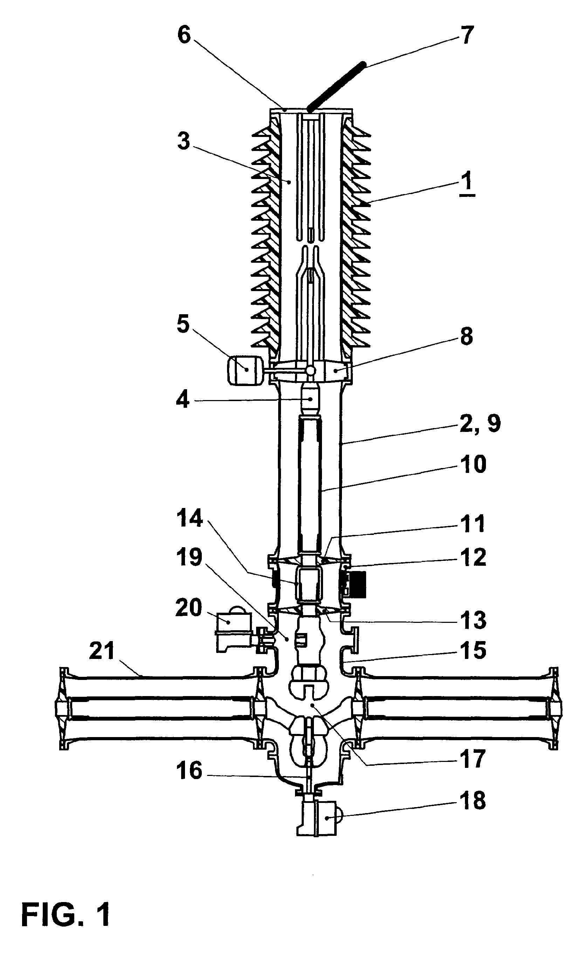

Die Figur 1 zeigt einen stark vereinfacht dargestellten Ausschnitt aus einer ersten Ausführungsform einer Hochspannungsschaltanlage. Der untere Teil dieser Hochspannungsschaltanlage ist als einphasig metallgekapselte gasisolierte Schaltanlage ausgebildet. An der Stelle der bei konventionellen Schaltanlagen vorgesehenen Hochspannungsdurchführung , welche jeweils die Verbindung mit der ankommenden bzw. abgehenden Freileitung herstellt, ist bei dieser Hochspannungsschaltanlage ein Schaltgerät 1 eingebaut worden, welches mittels eines Distanzstücks 2 mit dem unteren Teil der Hochspannungsschaltanlage verbunden ist. Als Schaltgeräte 1 können, je nach Auslegung der Anlage, Leistungsschalter aller Typen oder beispielsweise auch Lasttrennschalter vorgesehen werden. Das Schaltgerät 1 für sich allein oder in Verbindung mit dem Distanzstück 2 ersetzt die Hochspannungsdurchführung, wobei die Funktion der Durchführung jedoch vom Schaltgerät 1 wahrgenommen wird.

Hier ist beispielsweise ein Hybridleistungsschalter im ausgeschalteten Zustand, der eine isoliergasgefüllte Löschkammer 3 in Reihe mit einer von dem Isoliergas umschlossen Vakuumschaltkammer 4 aufweist, in schematisiert und vereinfacht dargestellter Form gezeigt. Die Löschkammer 3 und die Vakuumschaltkammer 4 werden durch einen gemeinsamen Antrieb 5, der in der Mitte zwischen den beiden Kammern angeordnet ist, betätigt. Der obere Anschlussflansch 6 dieses Schaltgeräts 1 ist mit der ankommenden bzw. abgehenden Freileitung 7 elektrisch leitend verbunden.

Der Hybridleistungsschalter weist auf der unteren, dem ihn tragenden Distanzstück 2 zugewandten Seite, ein Zwischengehäuse 8 auf, welches den Antrieb 5 trägt und in welchem das Getriebe für den Hybridleistungsschalter untergebracht ist. Das Zwischengehäuse 8 ist gasdicht verbunden mit einer Kapselung 9 des Distanzstücks 2. Die Kapselung 9 kann aus Metall oder aus einem Isoliermaterial bestehen, ist sie isolierend ausgebildet, so liegt der Antrieb 5 auf Potential. Das Distanzstück 2 weist zudem einen elektrisch leitenden Aktivteil 10 auf, der oben mit der Vakuumschaltkammer 4 und unten mit dem Aktivteil eines Schottungsisolators 11 verbunden ist. Die Kapselung 9 ist mit der Erdseite des Schottungsisolators 11 gasdicht verbunden. Der Schottungsisolator 11 stellt das obere Ende eines Zwischenstücks 12 dar. Das Zwischenstück 12 ist, wie schematisch dargestellt, für den Einbau von Strom- und Spannungswandlern vorgesehen, es weist am unteren Ende einen Stützisolator 13 auf, der nicht als Schottungsisolator ausgelegt ist. Zwischen dem Schottungsisolator 11 und dem Stützisolator 13 wird ein Aktivteil 14 gehalten.

An das Zwischenstück 12 schliesst sich ein Universalgehäuse 15 an, welches einen mit einer Isolierstange 16 betätigen Winkeltrenner 17 enthält. Die Aktivteile des Winkeltrenners 17 sind mit dem Aktivteil 14 elektrisch leitend verbunden. Der Winkeltrenner 17 wird durch einen Antrieb 18 betätigt. In das Universalgehäuse 15 ist zudem ein Erder 19 eingebaut, der durch einen Antrieb 20 betätigt wird. Dieser Erder 19 ermöglicht es, bei geöffnetem Winkeltrenner 17, diese Phase der Freileitung 7 zu erden. Der Winkeltrenner 17 stellt die Verbindung zwischen der Freileitung 7 und einer Phase einer metallgekapselten Sammelschiene 21 her.

Der Schottungsisolator 11 ist so ausgelegt, dass er den oberhalb von ihm gelegenen obere Gasraum vollständig vom unterhalb von ihm gelegenen unteren Gasraum abschottet, und dass er, wenn der obere Gasraum entleert ist, d.h. wenn von oben kein Gegendruck wirkt, trotzdem dem vollen Druck im unteren Gasraum standhält. Ehe der obere Gasraum entleert wird, muss natürlich der Winkeltrenner 17 offen sein und der Erder 19 muss geschlossen sein. Ein derartiges Entleeren ist beispielsweise nötig, wenn das Schaltgerät 1 revidiert wird. Es ist aber auch möglich, das Schaltgerät 1 in einem separat abschottbaren Gasraum anzuordnen, sodass dieses sehr rasch und ohne das Ablassen von Isoliergas gegen ein neuwertiges Schaltgerät 1 ausgewechselt werden kann. Durch diese Anlagenkonfiguration wird die Verfügbarkeit der Anlage vorteilhaft erhöht.

In dem unteren metallgekapselten Teil dieser Hochspannungsschaltanlage sind dann in der Regel keine Schaltgeräte mehr vorhanden, welche für die Abschaltung von Betriebs- und Fehlerströmen vorgesehen sind. Es sind jedoch auch Mischformen möglich, bei denen der eine oder andere Leistungsschalter in der metallgekapselten gasisolierten Hochspannungsschaltanlage belassen wird, dies kann der Fall sein, wenn beispielsweise Umschaltmöglichkeiten zwischen zwei parallelen metallgekapselten Sammelschienensystemen der Hochspannungsschaltanlage vorgesehen sind. Es ist jedoch auch möglich, bereits bestehende metallgekapselte gasisolierte Hochspannungsschaltanlagen mit der hier beschriebenen Ausführungsform zu kombinieren. Ferner ist es möglich, bei bestehenden metallgekapselten gasisolierten Schaltanlagen die Hochspannungsdurchführungen zu ersetzen durch die hier beschriebene Ausführungsform und danach die in dieser Anlage vorhandenen, vergleichsweise schlecht für Revisionen zugänglichen Leistungsschalter stillzulegen, um so zu einer besser verfügbaren Hochspannungsschaltanlage zu gelangen.

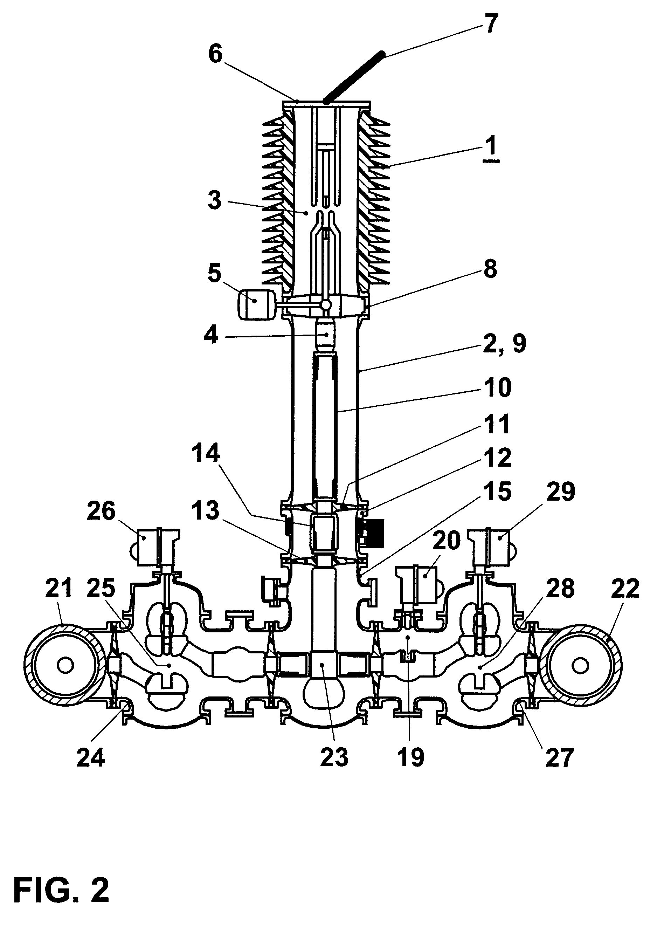

Die Figur 2 zeigt einen stark vereinfacht dargestellten Ausschnitt aus einer zweiten Ausführungsform einer Hochspannungsschaltanlage. Von der Figur 1 unterscheidet sich diese Ausführungsform lediglich dadurch, dass der untere, ebenfalls einphasig metallgekapselte Teil dieser Hochspannungsschaltanlage mit zwei Sammelschienen 21,22 versehen ist. In dem Universalgehäuse 15 sind hier jedoch nur die Aktivteile 23, welche die Potentialverbindung zu den Sammelschienen 21,22 herstellen, vorgesehen. Die Verbindung zum Gehäuse der linken Sammelschiene 21 stellt ein weiteres Universalgehäuse 24 dar, in welches ein Trenner 25 eingebaut ist, der durch einen oben angeordneten Antrieb 26 betätigt wird. Die Verbindung zum Gehäuse der rechten Sammelschiene 22 stellt ein weiteres Universalgehäuse 27 dar, in welches ein Trenner 28 eingebaut ist, der durch einen oben angeordneten Antrieb 29 betätigt wird. In das Universalgehäuse 27 ist zudem ein Erder 19 eingebaut, der durch einen oben angeordneten Antrieb 20 betätigt wird. Dieser Erder 19 ermöglicht es, bei geöffneten Trennern 25 und 28, diese Phase der Freileitung 7 zu erden. Der Trenner 25 stellt die Verbindung zwischen der Freileitung 7 und der Sammelschiene 21 her, der Trenner 28 stellt die Verbindung zwischen der Freileitung 7 und der Sammelschiene 22 her.

Bei dieser Ausführungsform sind alle Antriebe 20, 26 und 29 auf der Oberseite der metallgekapselten gasisolierten Schaltanlage angeordnet, sodass auf der Unterseite keine empfindlichen Bauteile vorstehen. Diese Ausführungsform kann deshalb bei Bedarf ohne aufwendige Fundamentierungen direkt auf die Erde gestellt werden. Diese Hochspannungsschaltanlage ist wasserdicht und kann deshalb auch in einem sumpfigen Gebiet ohne Fundamente direkt auf dem Boden aufgestellt werden. Im Extremfall ist sogar eine schwimmende Anordnung vorstellbar, da der, durch die vergleichsweise grossen Gasvolumina bedingte, Auftrieb grösser ist, als das Eigengewicht der Anlage. Bei derartigen unkonventionellen Aufstellungen ist es sowohl möglich, die Anlage lediglich phasenweise mechanisch starr zu verbinden, als auch möglich, insgesamt alle drei Phasen mechanisch zu einer starren Einheit zu verbinden. Die stets nötigen Vorort-Steuerschränke können ebenfalls problemlos auf der Oberseite der Sammelschienen 21 und 22 befestigt werden, sodass in der Fabrik bereits vorgefertigte transportfertige Baueinheiten entstehen, die bei der Montage vor Ort einfach zu handhaben sind, sodass eine schnelle Aufstellung und Verdrahtung gewährleistet ist.

Wenn die Zuführungen zu der Hochspannungsschaltanlage und die Abgänge mittels Freileitungen realisiert werden, so können die Toleranzen der Anschlüsse für die Freileitungsphasen, die sich bei einer Positionierung ohne Fundamente zwangsläufig ergeben, vergleichsweise einfach ausgeglichen werden. Mit derartigen Hochspannungsschaltanlagen können beispielsweise Grossbaustellen sehr einfach mit elektrischer Energie versorgt werden. Im Falle von Katastrophen oder bei Umbauarbeiten in bestehenden Hochspannungsschaltanlagen können mit Hilfe der beschriebenen Ausführungsform vergleichsweise einfach und schnell Ersatzanlagen oder Überbrückungen hergestellt werden.

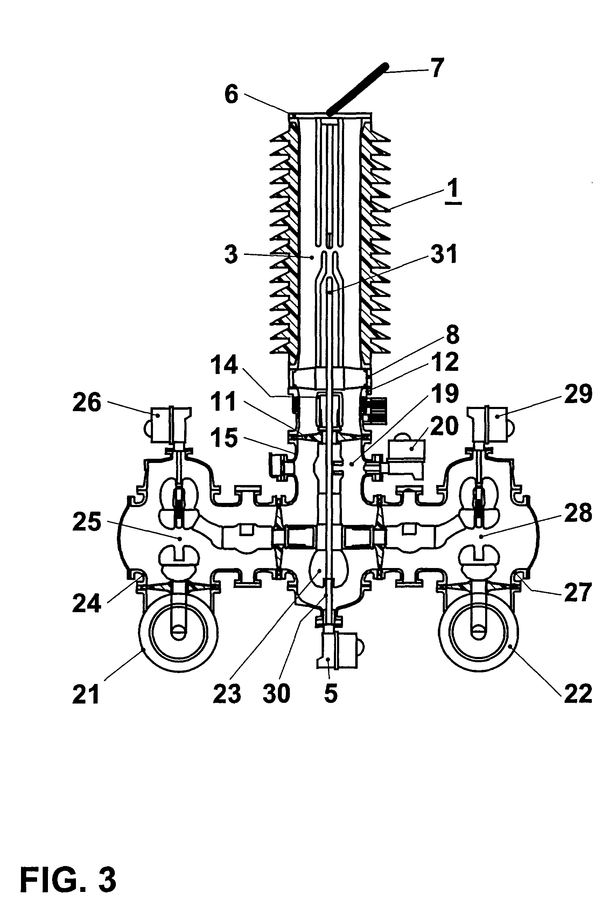

Die Figur 3 zeigt einen stark vereinfacht dargestellten Ausschnitt aus einer dritten Ausführungsform einer Hochspannungsschaltanlage. Von der Figur 2 unterscheidet sich diese Ausführungsform dadurch, dass beim unteren, ebenfalls einphasig metallgekapselten Teil dieser Hochspannungsschaltanlage die beiden Sammelschienen 21,22 unterhalb der jeweils zugeordneten Trenner 25 und 28 angeordnet sind, und dass das Schaltgerät 1 von einem unterhalb der Hochspannungsschaltanlage angeordneten Antrieb 5 betätigt wird. Der Antrieb 5 wird durch das Universalgehäuse 15 gehalten, die Potentialdifferenz zwischen der Wand des Universalgehäuses 15 und den Aktivteilen 23 wird durch eine Isolierstange 30 überbrückt, die den Antrieb 5 mit einem beweglichen Löschkontakt 31 des Schaltgeräts 1 verbindet. Der Erder 19 ist hier seitlich am Universalgehäuse 15 angeordnet, sein Schaltstift greift im geschlossenen Zustand in die Aktivteile 23 ein.

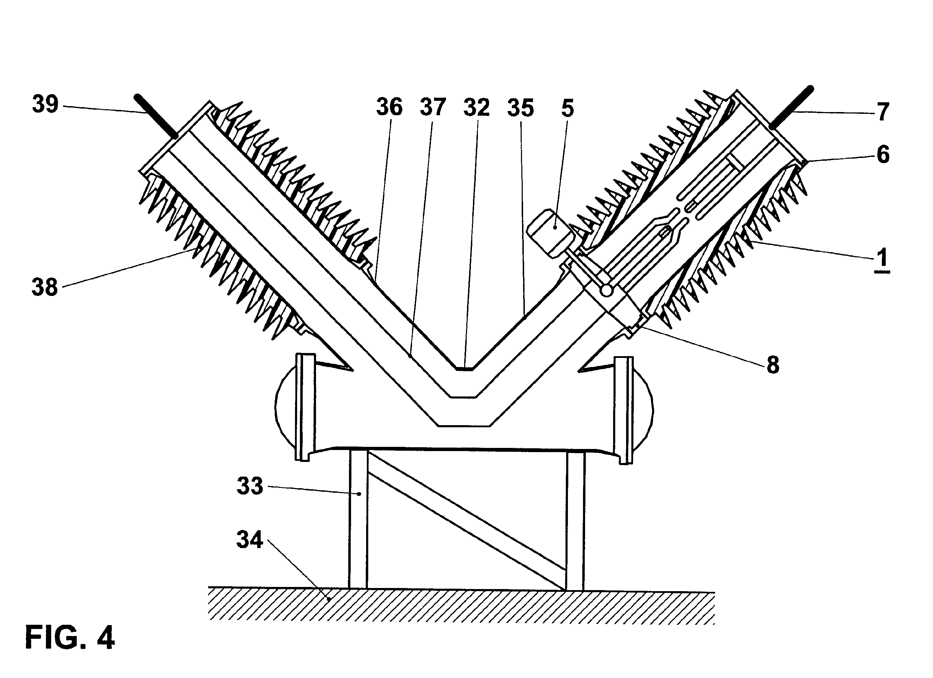

Die Figur 4 zeigt einen stark vereinfacht dargestellten Ausschnitt aus einer vierten Ausführungsform einer Hochspannungsschaltanlage. Bei dieser Ausführungsform handelt es sich um einen entsprechend dem Erfindungsgedanken modifizierten Dead-Tank-Schalter, d.h. das ursprünglich im isoliergasgefüllten Kessel 32 angeordnete Schaltgerät 1 ist nach ausserhalb an die Stelle einer Durchführung verlagert worden. Der Kessel 32 kann deshalb wesentlich verkleinert und damit preisgünstiger gestaltet werden. Der Kessel 32 wird durch ein Gerüst 33 gehalten, welches mit einem Fundament 34 verbunden ist. Der Kessel 32 weist zwei Anschlussstutzen 35 und 36 auf. Der Anschlussstutzen 35 ist mit einem Zwischengehäuse 8 druckdicht verbunden, welches das Schaltgerät 1 trägt. Der Anschlussflansch 6 des Schaltgeräts 1 ist mit der Freileitung 7 elektrisch leitend verbunden. Die Aktivteile des Schaltgeräts 1 sind mit dem Aktivteil 37 des modifizierten Dead-Tank-Schalters verbunden. Der zweite Anschlussstutzen 36 ist druckdicht mit einer Hochspannungsdurchführung 38 verbunden, welche die elektrisch leitende Verbindung zu einer Freileitung 39 herstellt. In dem Anschlussstutzen 35 oder im Kessel 32 kann der Einbau eines Erders vorgesehen werden. Auf den Anschlussstutzen 35 kann zudem ein weiteres Zwischenstück aufgesetzt werden, welches die nötigen Messeinrichtungen trägt. In den Kessel 32 kann beispielsweise auch ein Trenner eingebaut werden, welcher das Aktivteil 37 bei Bedarf unterbrechen kann.

Wird ein derartig modifizierter Dead-Tank-Schalter für höhere Spannungen ausgelegt, so kann auch die zweite Hochspannungsdurchführung 38 durch ein weiteres Schaltgerät 1 ersetzt werden, sodass eine Zweikammeranordnung entsteht. Der Spannungsabstand, der dann zwischen den beiden Freileitungen 7 und 39 nötig ist, kann es erforderlich machen, dass die beiden Anschlussstutzen 35 und 36 bei höheren Betriebsspannungen aus der in Fig. 4 gezeigten Ebene in voneinander verschiedene Ebenen gedreht werden, sodass der Abstand zwischen den Freileitungen 7 und 39 hinreichend gross wird.

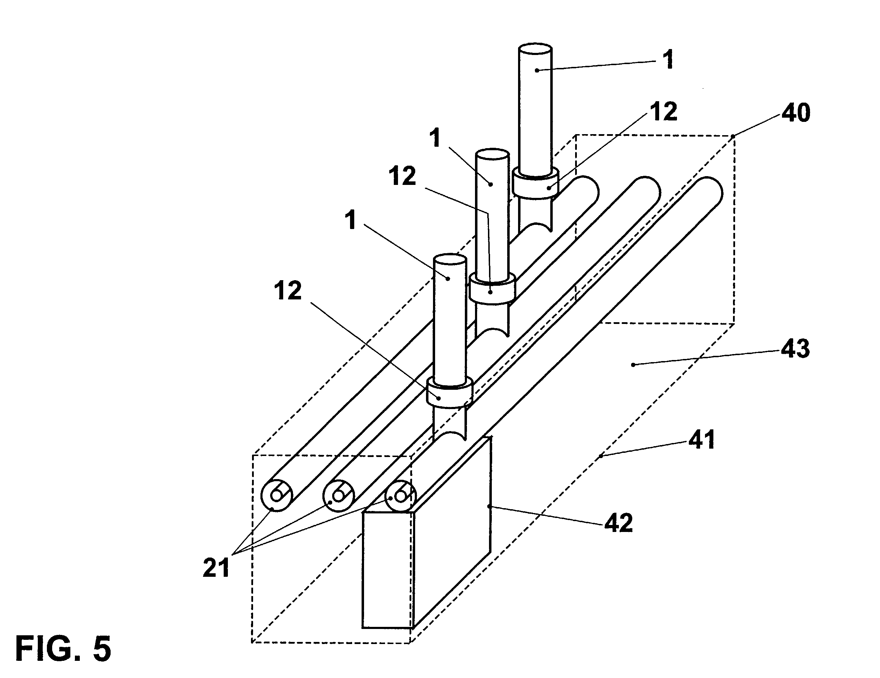

Die Fig. 5 zeigt ein Modul einer schematisch dargestellten dreiphasigen einphasig metallgekapselten gasisolierten Hochspannungsschaltanlage, welches in einem heute üblichen Normcontainer 40 untergebracht ist. Der Aufbau jeder der drei Phasen entspricht der in der Fig. 1 dargestellten Anlage. Die Hochspannungsschaltanlage wird aus derartigen Modulen zusammengestellt. Die Kanten des quaderförmigen Normcontainers 40 sind durch gestrichelte Linien 41 angedeutet. Die Sammelschienen 21 liegen in einer Ebene parallel zur Grundfläche des Normcontainers 40, das sie tragende Gerüst ist nicht dargestellt. Ein Vorort-Steuerschrank 42 kann oberhalb oder unterhalb der Sammelschienen 21 liegen.

Die in Figur 5 dargestellte Möglichkeit der Anordnung der Sammelschienen 21 dicht unterhalb der oberen Grenzfläche des Normcontainers 40 ist jedoch besonders vorteilhaft, da hier die von den jeweiligen Sammelschienen 21 getragenen Schaltgeräte 1 vollständig aus dem Normcontainer 40 herausragen, sodass bezüglich der einzuhaltenden Spannungsabstände zwischen den oberen Anschlussflanschen der Schaltgeräte 1 und auch zwischen den oberen Anschlussflanschen und dem Dach des Normcontainers 40 keine Probleme entstehen. Die gasdichte Schottung wird dann so angeordnet, dass sie innerhalb der Abmessungen des Normcontainers 40 liegt. Die Schaltgeräte 1 können bei höheren Spannungen auch schräg gestellt werden, um die Spannungsabstände zwischen den oberen Anschlussflanschen der Schaltgeräte 1 zu vergrössern. Die Schaltgeräte 1 sind abnehmbar ausgebildet, sie werden während des Transports der Hochspannungsschaltanlage in dem sonst nicht genutzten Anlagenvolumen 43 transportiert und dann erst am Aufstellungsort definitiv montiert. Der Teil der Hochspannungsschaltanlage, der innerhalb des Normcontainers 40 liegt, wird stets mit Isoliergas gefüllt transportiert. Die Schaltgeräte 1 werden in der Regel erst nach der endgültigen Montage vor Ort mit Isoliergas gefüllt, es ist aber auch vorstellbar, auch diese mit einer zusätzlichen Schottung zu versehen, und sie dann ebenfalls mit Isoliergas gefüllt zu transportieren. Auf diese Art würde das Verschmutzungsrisiko vorteilhaft verkleinert.

Liegt der Aufstellungsort der in dem Normcontainer 40 untergebrachten Hochspannungsschaltanlage in kalten Regionen, wo eine Heizung der Geräte nötig ist, so wird das das Schaltgerät 1 tragende Distanzstück 2 so verlängert, dass es nach unten in den Normcontainer 40 hinein ragt. Die Sammelschienen 21 werden dann entsprechend tiefer angeordnet. Bei einem derartigen Aufbau genügt es dann, nur den Normcontainer 40 zu heizen, da die dadurch in dem Distanzstück 2 angeregte Gaszirkulation genügt, um auch das Schaltgerät 1 so zu erwärmen, dass keine Verflüssigung des Isoliergases auftreten kann.

Werden derartige Hochspannungsschaltanlagen für besonders hohe Betriebsspannungen ausgelegt, so muss gegebenenfalls jede Phase der Anlage in einem separaten Container untergebracht werden.

Wird der metallgekapselte Teil der Hochspannungsschaltanlage als dreiphasig metallgekapselte Anlage ausgeführt, so ist es auch bei dieser Ausführungsform möglich, die Leistungsschalter oder sonstigen Schaltgeräte in die Durchführungen zu integrieren.

### BEZEICHNUNGSLISTE

- 1: Schaltgerät
- 2: Distanzstück
- 3: Löschkammer
- 4: Vakuumschaltkammer
- 5: Antrieb
- 6: Anschlussflansch
- 7: Freileitung
- 8: Zwischengehäuse
- 9: Kapselung
- 10: Aktivteil
- 11: Schottungsisolator
- 12: Zwischenstück
- 13: Stützisolator
- 14: Aktivteil
- 15: Universalgehäuse
- 16: Isolierstange
- 17: Winkeltrenner
- 18: Antrieb
- 19: Erder
- 20: Antrieb
- 21,22: Sammelschiene
- 23: Aktivteile
- 24: Universalgehäuse
- 25: Trenner
- 26: Antrieb
- 27: Universalgehäuse
- 28: Trenner
- 29: Ventilscheibe
- 30: Isolierstange
- 31: beweglicher Löschkontakt
- 32: Kessel
- 33: Gerüst
- 34: Fundament
- 35,36: Anschlussstutzen
- 37: Aktivteil
- 38: Durchführung
- 39: Freileitung
- 40: Normcontainer
- 41: gestrichelte Linien
- 42: Vorort-Steuerschrank
- 43: Anlagenvolumen

## Patentansprüche

1. Hochspannungsschaltanlage, welche pro Phase mindestens eine Freileitung (7,39), mindestens ein Übergangselement für das Einleiten der mindestens einen Freileitung (7,39) in einen metallgekapselten Teil der Schaltanlage und mindestens ein Schaltgerät (1) für das Schalten von Betriebs- und/oder Fehlerströmen aufweist, **dadurch gekennzeichnet,**
- **dass** das Schaltgerät (1) in das Innere des Übergangselements integriert ist.

2. Hochspannungsschaltanlage nach Anspruch 1, **dadurch gekennzeichnet,**
- **dass** als Schaltgerät (1) mindestens eine Löschkammer (3) mit für Freiluftaufstellung geeigneter Löschkammerisolierung vorgesehen ist.

3. Hochspannungsschaltanlage nach Anspruch 1, **dadurch gekennzeichnet,**
- **dass** als Schaltgerät (1) ein mit mindestens zwei Löschkammern versehener Hybridleistungsschalter oder ein als Ein- oder Mehrkammerschalter ausgebildeter herkömmlicher Leistungsschalter oder ein Lasttrennschalter vorgesehen ist.

4. Hochspannungsschaltanlage nach einem der Ansprüche 1 bis 3, **dadurch gekennzeichnet,**
- **dass** im Bereich des Übergangs vom Schaltgerät (1) in den metallgekapselten Teil oder im metallgekapselten Teil der Hochspannungsschaltanlage eine Erdungsmöglichkeit für die Aktivteile des Schaltgeräts (1) vorgesehen ist, und
- **dass** das Schaltgerät (1) bei eingelegtem Erder (19) ausbaubar ist.

5. Hochspannungsschaltanlage nach einem der Ansprüche 1 bis 4, **dadurch gekennzeichnet,**
- **dass** jeweils zwischen dem Schaltgerät (1) und dem metallgekapselten Teil der Hochspannungsschaltanlage eine Schottung vorgesehen ist, welche für das Schaltgerät (1) ein unabhängiges Gasvolumen schafft.

6. Hochspannungsschaltanlage nach einem der voranstehenden Ansprüche, **dadurch gekennzeichnet,**
- **dass** diese ohne Fundamentierung erstellbar ist.

7. Hochspannungsschaltanlage nach Anspruch 6, **dadurch gekennzeichnet,**
- **dass** sie schwimmfähig ausgebildet ist.

8. Hochspannungsschaltanlage nach einem der Ansprüche 1 bis 6, **dadurch gekennzeichnet,**
- **dass** sie so in mindestens einem sie tragenden Container montiert ist, dass die Schaltgeräte (1) ausserhalb und die Sammelschienen (21), die Antriebe (5,18,20) und der Vorort-Steuerschrank (42) innerhalb des Containers angeordnet sind.

9. Hochspannungsschaltanlage nach Anspruch 8, **dadurch gekennzeichnet,**
- **dass** die Schaltgeräte (1) für den Transport der Hochspannungsschaltanlage demontierbar sind, und
- **dass** die demontierten Schaltgeräte (1) in einem Anlagenvolumen (43) innerhalb des Containers geschützt transportierbar sind.

10. Hochspannungsschaltanlage nach einem der Ansprüche 1 bis 5, **dadurch gekennzeichnet,**
- **dass** bei einem Dead-Tank-Schalter die beiden Anschlussstutzen (35,36) in einer Ebene oder in voneinander verschiedenen Ebenen angeordnet sind.

11. Hochspannungsschaltanlage nach einem der Ansprüche 1 bis 10, **dadurch gekennzeichnet,**
- **dass** der metallgekapselte Teil der Schaltanlage dreiphasig metallgekapselt ausgeführt ist.
